# EUROPÄISCHE PATENTSCHRIFT

(11) **EP 1 564 364 B1**
(45) Veröffentlichungstag und Bekanntmachung des Hinweises auf die Patenterteilung: **29.04.2015**
(21) Anmeldenummer: 05003601.1
(22) Anmeldetag: 27.06.2003
(51) Int. Cl.: E06B 9/68, E06B 9/88, E04F 10/06, G08C 17/02, G08C 23/04

(54) **Steuervorrichtung zur Schaltung von Stromkreisen und Verfahren zur Festlegung und Erfassung der Endpositionen von elektrisch angetriebenen Sonnenschutzeinrichtungen**
Control device for switching of circuits and method for setting and determining the end positions of electrically driven solar protections
Dispositif de commande pour la commutation de circuits électriques et méthode pour établir et déterminer les positions de fin de course d'une protection solaire

(43) Veröffentlichungstag der Anmeldung: 17.08.2005
(62) Teilanmeldung aus: 03014713.6
(73) Patentinhaber: Weinor GmbH & Co. KG, 50829 Köln (DE)
(72) Erfinder: Stawski, Karl-Heinz, 50769 Köln (DE)
(74) Vertreter: Patentanwaltskanzlei Methling

(56) Entgegenhaltungen:
- EP-A- 1 130 211
- EP-A- 1 160 415
- FR-A1- 2 741 900

## Beschreibung

Die Erfindung betrifft ein System aus einer Steuervorrichtung zur Schaltung von Stromkreisen von Antriebsmotoren von Sonnenschutzeinrichtungen, insbesondere Markisen, mit zumindest einer Stromzufuhr sowie einer Funkfernbedienung, wobei die Steuervorrichtung einen Empfänger für Funksignale und/oder Infrarotsignale der Funkfernbedienung sowie Mittel zur Verarbeitung der Funksignale und Mittel zur Schaltung von zumindest einem Stromkreis aufweist, wobei die Steuervorrichtung über zumindest einen Sensor zur Überwachung eines Umgebungsparameters und/oder über einen Zeitschaltmechanismus verfügt.

Des Weiteren betrifft die Erfindung ein Verfahren zur Festlegung und Erfassung der Endpositionen von elektrisch angetriebenen Sonnenschutzeinrichtungen, insbesondere Markisen.

Aus der EP 1 130 211 A1 ist ein elektronisches System zur Einstellung von Stopps und Anfahrten von automatischen Motoruntersetzungsgetrieben zum Wickeln von Jalousien und Markisen, mit allen Merkmalen des Oberbegriffs von Anspruch 1, sowie ein Verfahren zum Bedienen dieser Einrichtungen bekannt. Aus der EP 1 160 415 A1 ist es bekannt, eine Fernbedienung zur Programmierung der Steuerung von Verdunkelungssystemen zu verwenden. Nachteilig bei beiden bekannten Vorgehensweisen ist der komplizierte Ablauf der Programmierung und Einspeicherung von Endpositionen der Jalousien in die jeweilige Steuerung.

Es sind Steuervorrichtungen zur Schaltung von Stromkreisen bekannt, die über einen Empfänger für Funksignale und/oder Infrarotsignale verfügen, sowie Mittel zur Verarbeitung der Funksignale und Mittel zur Steuerung zumindest eines Stromkreises. Nachteilig bei diesen bekannten Steuervorrichtungen ist es jedoch, dass eine Betätigung jeweils manuell direkt an der Steuervorrichtung oder aber mittels einer Funkfernbedienung erfolgen muss. Insbesondere bei der Schaltung von Stromkreisen von Antriebsmotoren einer Beschattungseinrichtung wie einer Markise ist es nachteilig, wenn eine solche Schaltung ausschließlich infolge manueller Betätigung erfolgt. Werden bei der Schaltung solcher Stromkreise Umgebungsparameter wie beispielsweise Windstärke, Sonneneinstrahlung oder Niederschläge nicht berücksichtigt, so können Schäden an den zu steuernden Einrichtungen auftreten.

Es ist bekannt, die Endposition von elektrisch angetriebenen Sonnenschutzeinrichtungen, insbesondere Markisen dadurch festzulegen und zu erfassen, d.h. in der Motorsteuerung einzuspeichern, dass zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzreinrichtung dient, gleichzeitig aktiviert werden und die Position, die die Sonnenschutzeinrichtung im Moment der gleichzeitigen Aktivierung der zwei Strom-/ Spannungsversorgungsleitungen hat, als Endposition der Sonnenschutzeinrichtung in der Antriebsmotorsteuerung eingespeichert wird. Hierzu ist an der Bedieneinrichtung der Sonnenschutzeinrichtung ein spezieller Schalter oder eine spezielle Schalterstellung vorgesehen.

Die Aufgabe der Erfindung ist es, ein System aus einer Steuervorrichtung zur Schaltung von Stromkreisen von Antriebsmotoren von Sonnenschutzeinrichtungen, insbesondere Markisen, mit zumindest einer Stromzufuhr sowie einer Funkfernbedienung, derart weiterzubilden, dass die Festlegung und Erfassung der Endpositionen der Sonnenschutzeinrichtung mittels einer Fernbedienung auf einfache Art und Weise erfolgen kann und ferner ein Verfahren zur Festlegung und Erfassung der Endposition von elektrisch angetriebenen Sonnenschutzeinrichtungen, insbesondere Markisen, bereitgestellt wird, mit dem es möglich ist, die Festlegung und Erfassung der Endpositionen mittels einer Fernbedienung auszulösen, ohne dass es der Betätigung eines Schalters an der Bedieneinrichtung der Sonnenschutzeinrichtung bedarf.

Die Aufgabe wird mittels eines Systems gemäß Anspruch 1 sowie eines Verfahrens gemäß Anspruch 11 gelöst.

Die Aufgabe wird erfindungsgemäß dadurch gelöst, dass bei einem System aus einer Steuervorrichtung zur Schaltung von Stromkreisen von Antriebsmotoren von Sonnenschutzeinrichtungen, insbesondere Markisen, mit zumindest einer Stromzufuhr sowie einer Funkfernbedienung, wobei die Steuervorrichtung einen Empfänger für Funksignale und/oder Infrarotsignale der Funkfernbedienung sowie Mittel zur Verarbeitung der Funksignale und Mittel zur Schaltung von zumindest einem Stromkreis aufweist, wobei die Steuervorrichtung über zumindest einen Sensor zur Überwachung eines Umgebungsparameters und/oder über einen Zeitschaltmechanismus verfügt, vorgesehen ist, dass die Steuervorrichtung Mittel aufweist, um eine Endposition der Sonnenschutzeinrichtung, insbesondere einer Markise, in der Antriebsmotorsteuerung dadurch einzuspeichern, dass auf ein bestimmtes Signal der Funkfernbedienung zwei Strom-/ Spannungsversorgungsleitungen, von denen die eine Strom-/Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig durchgeschaltet werden.

Die weitere Aufgabe wird erfindungsgemäß dadurch gelöst, dass, mittels einer erfindungsgemäßen Steuervorrichtung und einer Funkfernbedienung, auf ein bestimmtes Signal der Funkfernbedienung eine Steuervorrichtung mit einem Empfänger zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzreinrichtung dient, gleichzeitig aktiviert werden und die Position, die die Sonnenschutzeinrichtung im Moment der gleichzeitigen Aktivierung der zwei Strom-/ Spannungsversorgungsleitungen hat, als Endposition der Sonnenschutzeinrichtung in der Antriebsmotorsteuerung eingespeichert werden, wobei die Auslösung der Einspeicherung einer Endposition mittels einer Funkfernbedienung jeweils einmal für die Endposition "vollständig eingefahren" und die Endposition "vollständig ausgefahren" durchgeführt wird.

Die Vorteile der erfindungsgemäßen Steuervorrichtung liegen darin, dass bei der Schaltung von Stromkreisen Umgebungsparameter überwacht und berücksichtigt werden können, und somit die zu steuernde Einrichtung vor Schäden geschützt werden kann. Neben dem Schutz der zu steuernden Einrichtung liegen weitere Vorteile der erfindungsgemäßen Steuervorrichtung darin, dass in Abhängigkeit der zu steuernden Einrichtung und in Abhängigkeit des/der überwachten Umgebungsparameter/s, beispielsweise ein Gebäude, vor Überhitzung geschützt werden oder auch gegen Einbruch gesichert werden kann.

Die Vorteile des erfindungsgemäßen Verfahrens liegen darin, dass die Festlegung und Erfassung der Endpositionen von elektrisch angetriebenen Sonnenschutzeinrichtungen, insbesondere Markisen, unter Verwendung einer Fernbedienung möglich ist und somit der Ausfahrvorgang unmittelbar überwacht werden kann, da eine Bedienung mittels einer Fernbedienung standortunabhängig im Bereich der Reichweite der Fernbedienung ist und damit eine bessere Beobachtung des Ausfahrvorgangs erfolgen kann, da es nicht erforderlich ist, eine festinstallierte Bedieneinrichtung zu betätigen. Ein weiterer Vorteil liegt darin, dass das Verfahren sich auf den bekannten Stand der Technik zur Festlegung und Erfassung der Endpositionen von elektrisch angetriebenen Sonnenschutzeinrichtungen, insbesondere Markisen, stützt, und damit unabhängig vom Hersteller der Antriebseinrichtung universell einsetzbar ist.

Vorteilhafte Ausgestaltungen der Erfindung sind in den Unteransprüchen aufgeführt.

Ein weiteres Merkmal der erfindungsgemäßen Steuervorrichtung zur Schaltung von Stromkreisen ist es, dass Mittel vorgesehen sind, um eine Endposition einer Sonnenschutzeinrichtung, insbesondere einer Markise in der Antriebsmotorsteuerung der Sonnenschutzeinrichtung dadurch einzuspeichern, dass auf ein bestimmtes Signal der Funkfernbedienung oder durch manuelle Betätigung der Steuervorrichtung zwei Stromspannungsversorgungsleitungen gleichzeitig durchgeschaltet werden, von denen die eine Stromspannungsversorgungsleitung der Ansteuerung des Ausfahrens der Sonnenschutzeinrichtung und die andere Stromspannungsversorgungsleitung der Ansteuerung des Einfahrens der Sonnenschutzeinrichtung dient.

Des Weiteren können Mittel vorgesehen sein, um zumindest eine Stromspannungsversorgungsleitung mit einer beliebigen Spannung und/oder beliebigen Stromstärke zu beaufschlagen, um insbesondere eine Beleuchtungseinrichtung zu dimmen und/oder die Heizleistung einer Beheizungseinrichtung zu regeln.

Zur Überwachung relevanter Umgebungsparameter können alternativ oder kumulativ insbesondere ein Temperatursensor, ein Sensor zur Erfassung der Lichtstärke, insbesondere eine Fotozelle, ein Sensor zur Erfassung der Windstärke, ein Sensor zur Erfassung von Niederschlägen und/oder ein Bewegungssensor vorgesehen sein.

In einer weiteren vorteilhaften Ausgestaltung weist die Steuervorrichtung einen Sender für Funksignale und/oder Infrarotsignale auf, der die momentan automatisch und/oder manuell eingestellten Steuerungszustände und/oder die Messwerte der Sensoren zu einer Funkfernbedienung überträgt, wobei diese Funkfernbedienung einen Empfänger und ein Anzeigegerät zur Wiedergabe der ermittelten Steuerungszustände und/oder Messwerte aufweist.

Die erfindungsgemäße Steuervorrichtung, insbesondere zur Durchführung des erfindungsgemäßen Verfahrens, ist vorzugsweise so dimensioniert, dass sie in eine Standardunterputzdose (Schalterdose) eingebaut werden kann, insbesondere in eine Schalterdose mit einem Durchmesser von 66 mm, oder alternativ mit einem Gehäuse für eine Aufputzmontage ausgeführt ist. In einer weiteren Ausführungsform weist die Steuervorrichtung einen Spritzwasserschutz auf, so dass sie für die Montage und den Betrieb im Außenbereich geeignet ist.

Der Aufbau der erfindungsgemäßen Steuervorrichtung ist vorzugsweise modular, so dass die Steuereinheit als ganzes austauschbar oder um weitere Funktionen, d.h. Berücksichtigung weiterer Sensor- und/oder Fernbedienungssignale und/oder Zeitschaltermechanismen, erweiterbar ist.

## Patentansprüche

1. System aus einer Steuervorrichtung zur Schaltung von Stromkreisen von Antriebsmotoren von Sonnenschutzeinrichtungen, insbesondere Markisen, mit zumindest einer Stromzufuhr sowie einer Funkfernbedienung, wobei die Steuervorrichtung einen Empfänger für Funksignale und/oder Infrarotsignale der Funkfernbedienung sowie Mittel zur Verarbeitung der Funksignale und Mittel zur Schaltung von zumindest einem Stromkreis aufweist, wobei die Steuervorrichtung über zumindest einen Sensor zur Überwachung eines Umgebungsparameters und/oder über einen Zeitschaltmechanismus verfügt, **dadurch gekennzeichnet, dass** die Steuervorrichtung Mittel aufweist, um eine Endposition der Sonnenschutzeinrichtung, insbesondere einer Markise, in der Antriebsmotorsteuerung dadurch einzuspeichern, dass auf ein bestimmtes Signal der Funkfernbedienung zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig durchgeschaltet werden.

2. System nach Anspruch 1 , **dadurch gekennzeichnet, dass** Mittel vorgesehen sind, um zumindest eine Stromversorgungsleitung mit einer beliebigen Spannung und/oder beliebigen Stromstärke zu beaufschlagen.

3. System nach einem der vorherigen Ansprüche, **dadurch gekennzeichnet, dass** die Steuervorrichtung einen Temperatursensor aufweist.

4. System nach einem der vorherigen Ansprüche, **dadurch gekennzeichnet, dass** die Steuervorrichtung einen Sensor zur Erfassung der Lichtstärke, insbesondere eine Photozelle, aufweist.

5. System nach einem der vorherigen Ansprüche, **dadurch gekennzeichnet, dass** die Steuervorrichtung einen Sensor zur Erfassung der Windstärke aufweist.

6. System nach einem der vorherigen Ansprüche, **dadurch gekennzeichnet, dass** die Steuervorrichtung einen Sensor zur Erfassung von Niederschlägen aufweist.

7. System nach einem der vorherigen Ansprüche, **dadurch gekennzeichnet, dass** die Steuervorrichtung einen Bewegungssensor aufweist.

8. System nach einem der vorherigen Ansprüche, **dadurch gekennzeichnet, dass** die Steuervorrichtung einen Sender für Funksignale und/oder Infrarotsignale aufweist, der die momentan automatisch und/oder manuell eingestellten Steuerungszustände und/oder die Meßwerte der Sensoren zu einer Funkfernbedienung überträgt, wobei diese Funkfernbedienung einen Empfänger und ein Anzeigegerät zur Wiedergabe der übermittelten Steuerungszustände und/oder Meßwerte aufweist.

9. System nach einem der vorherigen Ansprüche, **dadurch gekennzeichnet, dass** die Dimensionierung der Steuervorrichtung eine Montage in einer Standardunterputzdose (Schalterdose), insbesondere in einer Schalterdose mit einem Durchmesser von 66 mm, ermöglicht.

10. System nach einem der vorherigen Ansprüche, **dadurch gekennzeichnet, dass** die Steuervorrichtung einen Spritzwasserschutz aufweist.

11. Verfahren zur Festlegung und Erfassung der Endpositionen von elektrisch angetriebenen Sonnenschutzeinrichtungen, insbesondere Markisen, mittels eines Systems nach einem der vorherigen Ansprüche, **dadurch gekennzeichnet, dass** auf ein bestimmtes Signal einer Funkfernbedienung eine Steuervorrichtung mit einem Empfänger zwei Strom-/ Spannungsversorgungsleitungen, von denen die eine Strom-/ Spannungsversorgungsleitung der Ansteuerung des Ausfahrens der Sonnenschutzeinrichtung und die andere Strom-/ Spannungsversorgungsleitung der Ansteuerung des Einfahrens der Sonnenschutzeinrichtung dient, gleichzeitig aktiviert werden und die Position, die die Sonnenschutzeinrichtung im Moment der gleichzeitigen Aktivierung der zwei Strom-/ Spannungsversorgungsleitungen hat, als Endposition der Sonnenschutzeinrichtung in der Antriebsmotorsteuerung eingespeichert werden, wobei die Auslösung der Einspeicherung einer Endposition mittels einer Funkfernbedienung jeweils einmal für die Endposition "vollständig eingefahren" und für Endposition "vollständig ausgefahren" durchgeführt wird.

## Claims

1. System from a control device for switching electrical circuits of drive motors of sun protection devices, in particular awnings, having at least one power supply and a radio remote control, the control device comprising a receiver for radio signals and/or infrared signals from the radio remote control, as well as means for processing the radio signals and means for switching at least one electrical circuit, the control device having at least one sensor for monitoring a parameter of the surroundings and/or having a time-switch mechanism, **characterised in that** the control device comprises means for inputting an end position of the sun protection device, in particular an awning, in the drive motor control by two electricity/power supply lines being simultaneously switched through, of which one electricity/power supply line activates the extension of the sun protection device and the other electricity/power supply line activates the retraction of the sun protection device, in response to a specific signal from the radio remote control.

2. System according to claim 1, **characterised in that** means are provided for applying any desired voltage and/or any desired current to at least one power supply line.

3. System according to either of the preceding claims, **characterised in that** the control device comprises a temperature sensor.

4. System according to any of the preceding claims, **characterised in that** the control device comprises a sensor for detecting the light intensity, in particular a photoelectric cell.

5. System according to any of the preceding claims, **characterised in that** the control device comprises a sensor for detecting the wind force.

6. System according to any of the preceding claims, **characterised in that** the control device comprises a sensor for detecting precipitation.

7. System according to any of the preceding claims, **characterised in that** the control device comprises a movement sensor.

8. System according to any of the preceding claims, **characterised In that** the control device comprises a transmitter for radio signals and/or infrared signals, which transmits the existing automatically and/or manually set control states and/or the measured values of the sensors to a radio remote control, said radio remote control comprising a receiver and a display unit for reproducing the transmitted control states and/or measured values.

9. System according to any of the preceding claims, **characterised In that** the dimensioning of the control device allows mounting thereof In a standard flush box (pattress), in particular in a pattress having a diameter of 66 mm.

10. System according to any of the preceding claims, **characterised in that** the control device comprises splashproof protection.

11. Method for determining and detecting the end positions of electrically driven sun protection devices, in particular awnings, by means of a system according to any of the preceding claims, **characterised in that**, in response to a specific signal from a radio remote control a control device comprising a receiver two electricity/power supply lines, of which one electricity/power supply line activates the extension of the sun protection device and the other electricity/power supply line activates the retraction of the sun protection device, are simultaneously activated and the position of the sun protection device at the time of the simultaneous activation of the two electricity/power supply lines is input in the drive motor control as the end position of the sun protection device, inputting an end position being triggered by a radio remote control once for the end position "completely retracted" and once for the end position "completely extended".

## Revendications

1. Système formé d'un dispositif de commande pour la commutation de circuits électriques de moteurs d'entraînement de dispositifs de protection solaire, en particulier des stores, avec au moins une alimentation électrique ainsi qu'une télécommande radio, dans lequel le dispositif de commande présente un récepteur pour signaux radio et/ou signaux infrarouges de la télécommande radio ainsi que des moyens pour traiter les signaux radio et des moyens pour commuter au moins un circuit électrique, dans lequel le dispositif de commande dispose d'au moins un capteur pour surveiller un paramètre ambiant et/ou d'un mécanisme de minuterie, **caractérisé en ce que** le dispositif de commande présente des moyens pour mémoriser une position de fin de course du dispositif de protection solaire, en particulier un store, dans la commande du moteur d'entraînement de sorte que soient connectés simultanément, à la suite d'un signal déterminé de la télécommande radio, deux lignes d'alimentation en courant/tension, dont la première ligne d'alimentation en courant/tension sert à commander le déploiement du dispositif de protection solaire et l'autre ligne d'alimentation en courant/tension sert à commander la rentrée du dispositif de protection solaire.

2. Système selon la revendication 1, **caractérisé en ce qu'**il est prévu des moyens pour alimenter au moins une ligne d'alimentation électrique par une tension quelconque et/ou une intensité de courant quelconque.

3. Système selon l'une quelconque des revendications précédentes, **caractérisé en ce que** le dispositif de commande présente un capteur de température.

4. Système selon l'une quelconque des revendications précédentes, **caractérisé en ce que** le dispositif de commande présente un capteur pour détecter l'intensité lumineuse, en particulier une cellule photoélectrique.

5. Système selon l'une quelconque des revendications précédentes, **caractérisé en ce que** le dispositif de commande présente un capteur pour détecter l'intensité du vent.

6. Système selon l'une quelconque des revendications précédentes, **caractérisé en ce que** le dispositif de commande présente un capteur pour détecter les précipitations.

7. Système selon l'une quelconque des revendications précédentes, **caractérisé en ce que** le dispositif de commande présente un capteur de mouvement.

8. Système selon l'une quelconque des revendications précédentes, **caractérisé en ce que** le dispositif de commande présente un émetteur pour signaux radio et/ou signaux infrarouges, qui transmet les états de commande réglés momentanément automatiquement et/ou manuellement et/ou les valeurs de mesure des capteurs à une télécommande radio, dans lequel cette télécommande radio présente un récepteur et un appareil d'affichage pour reproduire les états de commutation et/ou les valeurs de mesure transmis.

9. Système selon l'une quelconque des revendications précédentes, **caractérisé en ce que** le dimensionnement du dispositif de commande permet un montage dans une boîte de dérivation encastrée standard (boîte de commutateur), en particulier dans une boite de commutateur d'un diamètre de 66 mm.

10. Système selon l'une quelconque des revendications précédentes, **caractérisé en ce que** le dispositif de commande présente une protection contre les projections d'eau.

11. Procédé de fixation et de détection des positions de fin de course de dispositifs de protection solaire à entraînement électrique, en particulier des stores, au moyen d'un système selon l'une quelconque des revendications précédentes, **caractérisé en ce que**, à la suite d'un signal déterminé d'une télécommande radio à un dispositif de commande équipé d'un récepteur, sont activées simultanément deux lignes d'alimentation en courant/tension, dont la première ligne d'alimentation en courant/tension sert à commander le déploiement du dispositif de protection solaire et dont l'autre ligne d'alimentation en courant/tension sert à commander la rentrée du dispositif de protection solaire et la position, que le dispositif de protection solaire a au moment de l'activation simultanée des deux lignes d'alimentation en courant/tension, est enregistrée comme position de fin de course du dispositif de protection solaire dans la commande du moteur d'entraînement, dans lequel le déclenchement de la mémorisation d'une position de fin de course se fait au moyen d'une télécommande radio respectivement pour la position de fin de course « complètement rentrée » et pour la position de fin de course « complètement déployée ».
